# EUROPEAN PATENT APPLICATION

(11) **EP 1 396 945 A1**
(43) Date of publication of application: **10.03.2004**
(21) Application number: 02732767.5
(22) Date of filing: 21.05.2002
(51) Int. Cl.: H04B 3/54, H04J 11/00, H04L 7/00

(54) **SYNCHRONISATION METHOD FOR THE UPLINK CHANNEL IN A POINT-TO-MULTIPOINT COMMUNICATION WITH OFDM MODULATION**

(30) Priority: 23.05.2001 ES 200101179
(71) Applicant: Diseno de Sistemas en Silicio S.A., 46980 Paterna (Valencia) (ES)
(72) Inventor: BLASCO CLARET, Jorge Vicente, E-46020 Valencia (ES); RIVEIRO INSUA, Juan Carlos, E-46019 Valencia (ES); GAVILLERO MARTIN, Juan Miguel, E-46100 Burjasot (Valencia) (ES); IRANZO MOLINERO, Salvador, E-46019 Valencia (ES)
(74) Representative: Ungria Lopez, Javier
(86) International application number: PCT/ES2002/000239
(87) International publication number: WO 2002/095977

(57) **Abstract**

Where synchronization in time and frequency in the downstream channel has been previously carried out, and determined by the sending of synchronization sequences (3) in a communication between a head-end (1) and user equipment (2); the present invention is characterized because it corrects sampling frequency in the user equipments (2) by starting from the estimation carried out during frequency synchronization in the downstream channel, to synchronize the upstream channel in frequency, removing the need for the head-end to make corrections in reception in the upstream channel.

The user equipment (2) estimates (9) the moment the OFDM symbols (7) should be sent to the head-end (1) so that these are received by it at previously fixed moments in time.

Furthermore, this invention includes interrogation of the user equipment (2), which allows them to place requests for access to the upstream channel with the head-end then making the distribution between the requests received.

It is applicable to sending of data in bi-directional communication over the electric network.

## Description

### TECHNICAL FIELD OF THE INVENTION

The present invention pertains to the telecommunications sector, in particular it is applicable to two-way communication between a head-end and various users so as to carry out synchronization in the upstream channel, that is the link between the users and the head-end, where the electricity network is used as a means of communication to offer multiple services to the users.

### OBJECT OF THE INVENTION

The objective of the present invention is to provide a new, highly secure, time and frequency synchronization process for the upstream channel in the electricity network which avoids problems, typically due to high noise levels and selectivity in frequency inherently present during the transmission of data over the electricity network, thereby avoiding the production of false indications of synchronization in the upstream channel.

By means of the process in this invention, synchronization in frequency is undertaken whereby the various user transmitters synchronize at the frequency used by the head-end receiver, starting from the signal received in the downstream channel, which is defined as a communication running from the head-end equipment to the user equipment, so that the head-end equipment does not have to make any correction in frequency.

Furthermore, the process described herein comprises synchronization in time, with the objectives of estimating the moment in which the user equipment must send the OFDM symbols so that the head-end equipment will receive them at previously established fixed moments and the user equipment modifies the moment of transmission of the OFDM symbols so as to comply with this condition, and therefore the head-end equipment will not have to undertake correction in time.

Since synchronization in the upstream channel as described in the present invention is based on the synchronization carried out in the downstream channel, it must be mentioned that synchronization in the upstream as foreseen herein is based preferably on the synchronization process for the downstream as described in Spanish Patent submission N° 200102254.

### BACKGROUND OF THE INVENTION

Various methods of synchronizing communication in the upstream channel for transmission from multiple user equipments using OFDM modulation are known in the prior art, but none of these reaches the levels of high security needed to avoid false indications of synchronization in point to multipoint systems where the means of transmission is the electricity network.

It is well known that the electricity network is a difficult transmission medium due to the fact that the connection and disconnection of different apparatus on the network produces voltage peaks and impedance variation on the line, that cause channel response to vary over time.

Among the synchronization methods known, it is important to mention the method described in USA patent N° 5732113 , concerning a time synchronization process using one synchronization symbol with two equal halves, where, to carry out the synchronization a lesser number of samples is used than the number proposed by the present invention, and where impulse noise, which is very common in the electricity network, affects the synchronization to a much greater degree due to the fact that by definition these are occasional noises affecting a small number of samples, and therefore affect to a much greater degree the process in the USA patent N° 5732113, as already mentioned, more than the solution proposed in the present invention, therefore, the method of using only one synchronization symbol is not desirable in a transmission system using the electricity network.

One must also indicate that the use of one synchronization symbol means greater variance in the calculation or estimation of the synchronization due to the use of a smaller number of samples to carry out the synchronization.

P. Moose published the concept of using two equal symbols in: "A technique for orthogonal frequency division multiplexing frequency offset correction. IEEE Trans. on Comm., vol.42, pp2908-2914, October 1994", but these symbols have never been considered or used to carry out time synchronization, as occurs in the present invention, instead, Moose used them to estimate the error in analog translation frequency.

Furthermore, as has already been mentioned, synchronization in frequency in the upstream channel is undertaken by starting from frequency synchronization in the downstream channel, and as indicated in Spanish patent submission N° 200101154, frequency synchronization by means of the arc tangent of the correlation to correct the error in analog translation frequency is known in the prior art, for example in USA patent N° 5732113 or in the article by Moose; however in the case of the current invention, synchronization in frequency is carried out by means of estimating the sampling frequency error in the analog/digital converters in each one of the user receivers, which is substantially different from what is known in the prior art.

### DESCRIPTION OF THE INVENTION

To carry out frequency and time synchronization in the upstream channel for multiple users in a point to multipoint transmission system with OFDM modulation using the electricity network as the transmission means, the current invention comprises frequency synchronization by means of correcting sampling frequency in the various user equipment starting from the estimation carried out in frequency synchronization in the downstream. Furthermore, it comprises carrying out pre-compensation in the user equipment to take account of the rotation suffered by the various carriers on being sent by the upstream channel that is calculated based on the estimation of the rotation suffered by the carriers in the downstream channel. Both these characteristics allow frequency synchronization in the upstream to be carried out without the head-end equipment carrying out corrections in reception in the upstream channel, due to the fact that synchronization is undertaken in the user equipment.

Furthermore, the process in this invention comprises time synchronization whereby the user equipment estimates the moment to send the OFDM symbols to the head-end equipment, so that is will receive them in previously established fixed moment of time, and so that time synchronization is carried out from the signal received in the downstream channel, without the head-end having to undertake corrections in reception in the upstream channel.

The invention is further characterized because the user equipment is questioned by the head-end equipment by means of assignation slots (fragments of time and/or frequency), said user equipments replying to the head-end equipment when they want to send petitions to access the upstream channel, the head-end distributing band width in the upstream channel between the users that have requested to transmit and sending this distribution to the user equipments so that they transmit without collisions.

Time synchronization is carried out by means of the user equipment sending the OFDM symbols in the moments estimated from the signal received in the downstream channel, so that the head-end receives them at a given moment in time, or at least in a time window with a small number of samples, thereby avoiding the production of interferences due to not having correctly windowed the user signals.

In consequence, the head-end equipment never advances or delays a reception window; rather it maintains it in predetermined fixed moments, to which the user equipment adjusts.

Synchronization in frequency in the upstream channel is carried out from frequency synchronization in the downstream channel, because the same oscillators are used to generate the transmission and reception sample frequencies in both the head-end equipment and the user equipments.

Pre-compensation for the rotation carried out in the user equipment is undertaken by means of a rotor beginning with the rotation estimation in each one of the carriers in the received signals over the downstream channel in the user equipment and for which each user equipment has a rotor device in the transmitter as well as that used in the receiver, both of these having a similar function. Therefore, the rotor in the transmitters in the user equipment will function in the same manner as described in Spanish Patent Submission N° 200102254.

Pre-compensation for the rotation allows the signal to arrive at the head-end equipment as if there had been no error in frequency, due to the fact that the rotation carried out on transmission by means of this invention pre-compensates for the rotation produced by the sending of data over the electricity distribution network.

Furthermore, the invention is characterized because time synchronization comprises the generation and sending of one or more synchronization sequences from the user equipment to the head-end when the head-end equipment requires it; the synchronization sequence being made up of two identical synchronization symbols. The synchronization sequence is detected in the head-end by maximizing the maximum likelihood criteria (known in the prior art), so that time synchronization is carried out from the calculation of the maximum correlation of the sequence samples sent by the various users, where this maximum is determined as the mid point in the flat zone of the correlation peak the size of which in number of samples is equal to the number of samples of the cyclic prefix (a prefix that is conventionally introduced to avoid interference between symbols) without inter-symbol interference (ISI), and all of this being the same as that which occurs in the downstream, except with the one difference, that the head-end equipment knows approximately the moment in which the synchronization sequence will arrive from a specific user equipment, due to the fact that a prior request has been made to do this by means of assigning a slot following a slot allocation message (SAM) or assigning resources in the upstream to the users which is conventionally sent by the head-end equipment to the user equipment, therefore the synchronization sequence is sent in the slot assigned to the user.

The process of time synchronization in the upstream channel comprises an acquisition stage and a tracking stage where the moment of transmission of the OFDM symbols in the various user equipments is estimated, so that said symbols will be received by the head-end equipment in the previously established fixed moments in time, as has been previously mentioned.

The time synchronization acquisition stage is determined by an open loop in which the user equipment estimate the start of transmission for each OFDM symbol beginning from the time synchronization obtained in the downstream channel; so that having estimated the moment of arrival of the OFDM symbols received in the downstream channel, the user equipment compensates for delays introduced by the filters in its receiver and transmitter, as well as average error which is established due to the cyclic prefix and transmits the OFDM symbols in the moment estimated in such a way that the moment when the symbols begin in the electricity line will be approximately equal in the upstream and the downstream.

The time synchronization tracking stage is determined by a closed loop feed back in which the head-end equipment estimates, by means of the received signal sent by the user equipment, the number of samples that must be advanced or delayed in the sending of OFDM symbols by said user equipment so as to receive them at the head-end exactly in the moment expected; therefore, the head-end equipment sends information in the downstream channel to the user equipment on the calculation carried out as a parameter of a SAM message and starting from this, the user equipment carries out said advance or delay in sending the OFDM symbols.

The open loop in time synchronization is undertaken continually so that the estimation carried out by the closed loop compensates for the delay introduced by the channel, thereby achieving adequate synchronization.

When the head-end equipment wishes to know which users are interested in transmitting via the upstream channel, it assigns interrogation slots to the user equipments, in which the user equipments concerned send a predetermined symbol (a POLLING symbol that indicates a reply to an interrogation) when they wish to transmit in the upstream channel.

The interrogation slots are divided into small fragments of one or more symbol to interrogate various user equipments at the same time, and head-end assigns a fragment to one or more user equipments that it wishes to interrogate by means of SAM, so that the user that wishes to transmit replies to the interrogation using this fragment and not a complete slot.

In each fragment the users send only one POLLING symbol, leaving the rest of the fragment in silence when this occupies more than one symbol, so that there is no overlapping of POLLING symbols in reply to the interrogation of the users that may occur, when replying in two distinct fragments when the user equipment is not correctly synchronized in time.

The detection of the POLLING symbol that is the response to an interrogation request is carried out by means of the correlation of the received signal and that of the POLLING symbol previously stored in the head-end equipment. To carry out this function one preferably uses a matched filter.

The POLLING symbol has X equal parts so that during detection one may use a finite response matched filter with N/X products and delays, where N is the number of samples in the POLLING symbol sent by the user in the fragment assigned to the interrogation slot when it needs to transmit in the upstream channel.

Therefore, by means of the POLLING symbol the head-end equipment knows which user equipment wished to transmit, and therefore if necessary, asks for the synchronization sequence by means of a SAM.

The following drawings are provided to facilitate a better understanding of the present invention and while forming an integral part of the detailed description and the claims, they offer an illustrative but not limited representation of the principles of this invention.

### BRIEF DESCRIPTION OF THE DRAWINGS

**Figure 1.-** Schematically shows the time synchronization acquisition stage constituted by an open loop for the transmission by the user equipment in the upstream channel.
**Figure 2.-** Details the sending of OFDM symbols in the upstream channel following the time synchronization acquisition stage.

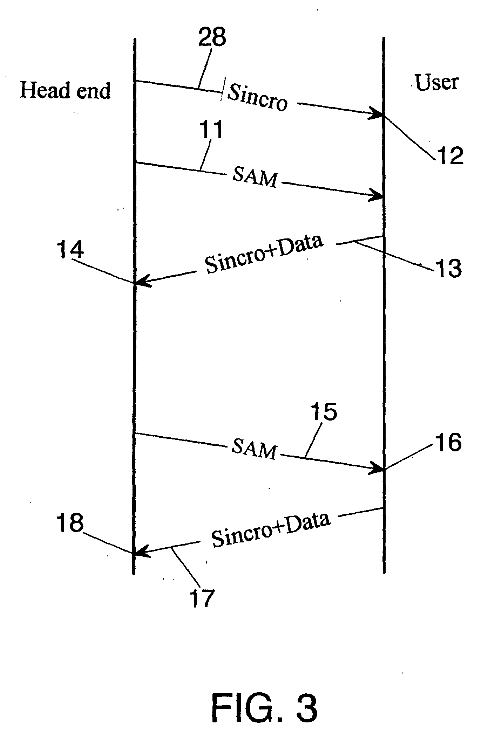

**Figure 3.-** Shows a time diagram of the time synchronization tracking stage carried out by means of a closed loop.
**Figure 4.-** Shows an example of the assignation of interrogation slots to determine which users wish to transmit.
**Figure 5.-** Shows a possible example of the filter used to detect the POLLING symbol.

### DESCRIPTION OF AN EMBODIMENT OF THE INVENTION

The following is a description of the invention based on the drawings as described previously.

As stated previously, the invention is applicable to two-way communication over the electricity network between a head-end 1 and various users 2 and has as its objective the provision of a process that makes synchronization possible in the upstream channel in a point to multipoint system with orthogonal frequency division multiplexing (OFDM) modulation, such as the process described in Spanish Patent submission No 20003024.

As known in the state of the art, the head-end equipment comprises an analog/digital converter that is connected to certain analog components (a separator and filters) that allow the signal to be introduced into the electricity network, and through which the signals are sent to the different user equipments 2, where receivers take the signal from the electricity network by means of a separator and analog filter, and give this signal to an analog/digital converter, so that together, all of this allows communication to take place in the downstream channel.

Similarly, the receiver of the head-end equipment comprises an analog/digital converter while the transmitter in the user equipment also contains an digital/analog converter to allow communication in the upstream channel.

In one embodiment of the invention, an error in sampling frequency exists between the head-end receiver and the user transmitter, due to the differences between the oscillators in their converters and because of which the sampling frequency used in these equipments will not be exactly the same.

The error in sampling frequency causes the constellation in each of the carriers in the modulation to rotate symbol by symbol. Furthermore, errors in sampling frequency also cause attenuation and noise in the system; therefore it is necessary to correct this error by means of synchronization in the upstream channel so that sampling frequency in the head-end receiver and sampling frequency in the transmitters of the user equipments will be the same.

A further problem also exists in that the head-end receiver may receive different information from different users through any of the carriers associated with the upstream channel; therefore it is necessary to undertake the transformation for the entire spectrum in the received signal.

Furthermore, the head-end receiver must know the moment in which the user equipments will send the OFDM symbols, and for which synchronization in time must be undertaken so as to avoid the production of interferences due to not having correctly detected the signals sent by the user equipments.

Sampling frequency synchronization is carried out in the transmitters of the user equipments from synchronization in frequency in the downstream channel.

Therefore, frequency synchronization in the transmitters of the users is carried out from the reference transmitted by the downstream channel for synchronizing the user receivers, as has been described in the Spanish patent submission N° 200101154.

The frequency used by the head-end equipment to transmit in the downstream channel is the same as the sampling frequency it uses to receive in the upstream channel (or a multiple or sub-multiple of it), and therefore, the frequency used in the downstream channel has the same error with respect to the nominal frequency which is that used to receive in the upstream channel. Therefore, when the users receive synchronization information in the downstream channel and they synchronize in frequency, at the same time they synchronize in frequency in the upstream channel and as a result there is no need to add any further additional steps for synchronization in frequency of multiple user equipments in transmission to the head-end in the upstream channel.

As described in Spanish patent submission N° 200101154, if in the downstream channel, error correction in frequency is carried out by means of a VCXO (voltage controlled crystal oscillator), then on carrying out frequency correction in reception for the users, at the same time frequency correction in transmission for the users is also carried out in the upstream channel, so that frequency correction in both channels is carried out at the same time. If on the other hand, error correction in frequency in the downstream channel is carried out by means of a resampler, as described in the Spanish patent submission N° 200101154, then on the user equipment it will be necessary to use a similar re-sampler in their transmission of same so as to pre-compensate this error in transmission and to ensure that the signal received by the head-end equipment will not have frequency error.

Furthermore, to correct the problem of the rotation of carriers in the upstream channel, it would be necessary to use a rotor in the head-end equipment, for each one of the users in the system, which would suppose a huge memory and process capacity over the signal received by the upstream channel, since multiple users transmit at the same time over said upstream channel, and therefore this is a significant difficulty.

To compensate for this difficulty, this invention has foreseen that the process of the invention undertakes a pre-compensation of the rotation in transmission by each one of the users and each user equipment includes a rotor in the transmitter as well as that used in its receiver as has been described in the Spanish patent submission N° 2001 01154.

The rotor of the transmitter in the user equipment estimates how much the carriers must be rotated in the upstream starting from the amount rotated by the constellation in each one of the carriers for the received signal from the downstream channel.

Therefore, the signal arrives at the head-end equipment as if it had no rotation in the carriers, because the rotation produced in transmission over the electricity network, has been pre-compensated.

The operation of the rotor in the transmitters in the user equipment uses the same concept as that used to operate the rotor in reception used in synchronization in the downstream channel, and which has been described in the Spanish patent submission N° 200101154, already mentioned.

Time synchronization in the upstream channel comprises a phase in which the user equipments estimate the moment to send the OFDM symbols to the head-end equipment, so that they receives them at previously established fixed moments of time, that is to say, the head-end never advances or delays its reception window; rather, it is the users that carry out the adjustment in their transmission window, advancing or delaying the moment when transmission of the OFDM symbols begins so that these adequately arrive in the reception window of the head-end equipment.

To carry out this function, time synchronization in the upstream channel is carried out by means of an acquisition stage and a tracking stage.

Time synchronization acquisition stage is carried out by open loop, and consists of extracting the information of the time synchronization obtained in the downstream channel, so as to carrying out synchronization in time in the upstream channel. This does not limit the system, because propagation times by the electricity network for the frequencies used are very small compared with the duration of the cyclic prefix that is conventionally added to the OFDM symbols to avoid intersymbol interference.

On receiving the synchronization signal sent by the head-end in the downstream channel, each transmitter in the user equipment estimates the start of the OFDM symbols. The error in this estimation is negative due to system design, that is, it is estimated that the start of the symbol is previous to its real position so that it always falls within the cyclic prefix (which is conventionally in front of the OFDM symbol); thereby avoiding intersymbol interference due to bad estimations. In the absence of a dispersive channel the average error in the estimation is half the length of the cyclic prefix. In dispersive channels, such as is the case of the electricity network, the error is somewhat less, because the initial part of the cyclic prefix is affected by intersymbol interference.

Individual user equipments insert the OFDM symbols to be transmitted in the upstream channel starting from the moment that has been estimated to be the start of the symbols in the downstream channel. For this the receivers in the user equipment estimate the moment of arrival of the symbols for the downstream channel, as for example is undertaken in the Spanish patent submission N°200101154, already mentioned, and compensate for the delay due to the reception filters in the downstream channel, the transmission filters in the upstream channel and the average error committed, which as has been mentioned, is half the length of the cyclic prefix. By this means, from the point of view of the user equipment, the symbols in the downstream channel and those in the upstream commence in the same moment in the channel. It is evident that any other temporary relationship between the symbols in the upstream and downstream channels could have been chosen without limiting the process described in this invention. The temporary difference between the symbols sent in the downstream channel and those received by the upstream, from the point of the view of the head end, corresponds to round trip delay introduced by the downstream and upstream channels.

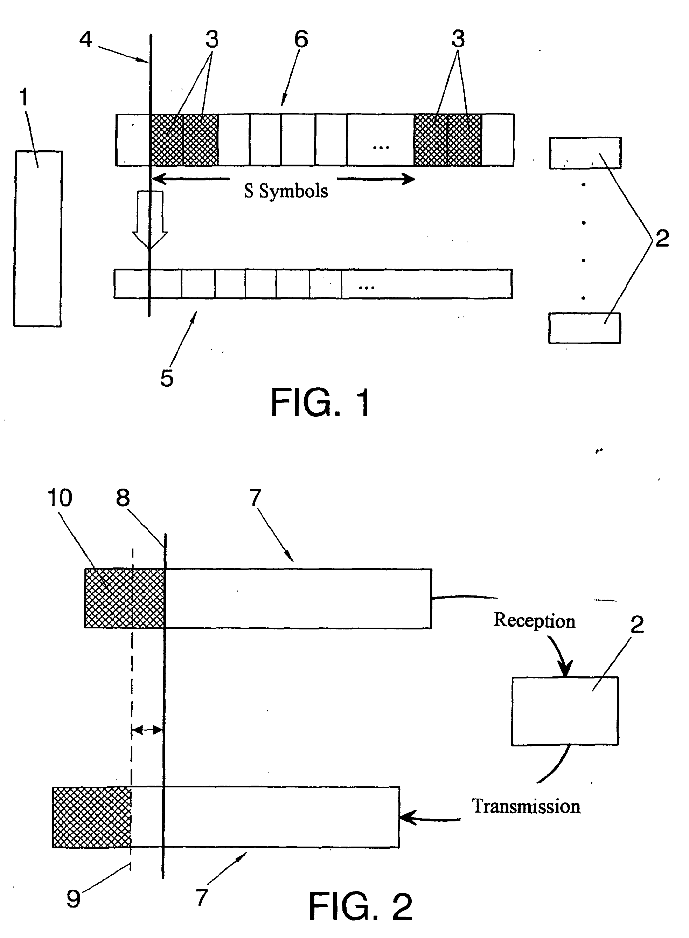

Figure 1 represents the acquisition stage carried out by means of the open loop, known as blind acquisition, where the start 4 of the synchronization 3 sequence symbols sent in the downstream channel serve as a temporary reference for the user equipment 2, which has been indicated by 5.

Reference 6 in Figure 1 represents the rest of the symbols sent in the downstream channel (data, equalization, etc).

Figure 2 schematically represents the moment in which the OFDM symbols 7 are sent in the upstream channel, the moment 8 calculated as the arrival of an OFDM symbol 7 in the downstream channel according to the synchronization of this channel, and starting from this moment 8, estimating when to transmit 9 in the upstream channel, where the error committed will always be negative and is represented by the difference between 8 and 9. In this Figure the numerical reference 10 represents the cyclic prefix.

Once blind acquisition has been carried out, the tracking stage begins by means of a closed loop because blind acquisition from synchronization in the downstream channel provides a temporary reference for when to transmit in the upstream channel, and since it can happen that this blind acquisition is not sufficiently precise, the head-end equipment may not be able to discriminate the signal received, because as previously described it always windows the signal received at fixed moments.

With blind acquisition correctly undertaken there remains one unknown value, from the point of view of the head-end equipment, due to the round trip delay in the channel that is estimated by means of the time synchronization in closed loop.

To this end, time synchronization is carried out in closed loop, so the number of samples by which the user must advance or delay its transmission to ensure that windowing in the head-end equipment will be optimum, is calculated through the signal received by the head-end from that user equipment.

This feedback information is sent in the downstream channel to the user equipment implicated as a parameter of the SAM message.

This process has been represented in a time scheme, starting from synchronization in the downstream channel so that the head-end sends synchronization sequences, 28, blind acquisition 12 is carried out in the manner explained, and at this point the user equipment sends data and the synchronization sequence,if this sequence has been requested by the head end, after having received in a SAM message 11 sent by the head end, and permission to use certain frequencies and times, that is, one or more slots in the upstream channel, as represented by the number 13. Starting from the synchronization sequence sent from the user equipment, the head-end calculates the number of samples that it must advance or delay so as to window optimally, as has been represented by the number 14. The head-end detects the moment of arrival of the OFDM symbol from the user, and calculates the difference between this moment and the exact moment in which it should have arrived. This difference in the number of samples is the reference that is sent to the user equipment involved so that it can correct the moment in which the symbols are sent.

Following this, the head-end sends the SAM message represented by the reference 15 in which it indicates the advance or delay that the user equipment must include in transmission of the OFDM symbols 7 in the upstream channel. The reference 16 represents detection of this information sent by the head-end where the user equipment carries out the correction previously mentioned and sends the OFDM symbols 7 in the corrected moment, and including, as an option, a synchronization sequence as represented by the reference 17, so that the OFDM symbols arrive at the head-end at the moment when windowing is carried out, as indicated by reference 18.

It must be indicated that the acquisition stage is carried out continuously each time that a synchronization sequence is detected in the downstream channel, where the moment of transmission is corrected with the open loop algorithm as described previously. Due to the fact that certain error may exist between the head-end and user equipments in the sampling frequency, windowing varies slowly and it is necessary to correct it by means of the acquisition stage described previously, before transmission is advanced or delayed so much that the receiver does not window correctly.

In the process that has been described, one of the problems that must be solved by the head end consists of the identification of the user equipments that wish to transmit at a given moment.

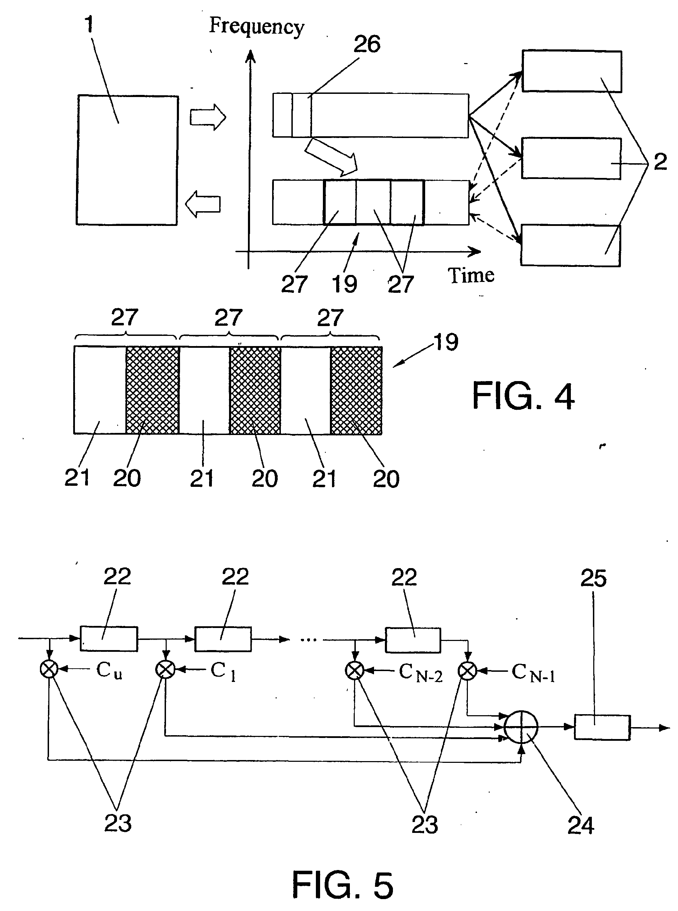

To do this, when a user wants to transmit in the upstream channel, it listens to the downstream channel and waits until the head-end 1 indicates by means of the information included in the SAM message 26, that one or more slots in the upstream channel are used for interrogation. In the example shown in Figure 4, interrogation slots are assigned to each one of the three user equipments 2 shown and that may or may not wish to transmit. An interrogation slot 19, divided into various fragments 27 (where each fragment is assigned to one of the users to be interrogated), is assigned and each user interested in transmitting replies in this slot if and only if it is interested in accessing the upstream channel and by sending a predetermined symbol, known as a POLLING symbol 20, to indicate the reply to the interrogation in the fragment 27 assigned by the interrogation slot 19. It is foreseen that requests by the user equipment may collide when various equipments from the same group in the same section of the slot 19 are being interrogated, and therefore a process to solve contention may be put to work or, on the contrary, the users affected will be left to send their access requests again later.

The interrogation slot 19 is divided in fragments 27 greater or equal in size to the POLLING symbol 20 leaving the rest of the fragment in silence so as to avoid the overlapping of POLLING symbols 20 in response to the interrogation of various users replying in the various fragments 27. Thus, the probability of interference is reduced, because the user equipments are already synchronized in time by blind acquisition, that is, in sub-optimum form, since part of the POLLING symbols 20 could be overlapped and this is avoided by means of introducing the silences 21.

To detect the POLLING symbols 20, the head-end equipment uses a special device that includes a filter with the form of the POLLING symbol as shown in Figure 5. This filter includes a series of delays 22 through which the response received in the interrogation slot 19 passes.

These delays 22 are determined by the sample interval, that is, the inverse of the sampling frequency used to sample the signal.

The output of the delays 32 are multiplied by filter coefficients Cᵢ, which are equal to the form of the POLLING symbol 20 due to the fact that the head-end knows this symbol. These coefficients are the complex conjugations of the samples that make up the POLLING symbol so that if the head-end is receiving a POLLING symbol 20, multiplying this by a multiplier 23 with the conjugated values and adding these by means of an adder 24, the maximum will be reached and therefore the arrival of the POLLING symbol can be detected, and this is used in the head-end to indicate the arrival of a response to an interrogation message.

Due to the fact that N is relatively high and therefore the number of products necessary is also high, the invention foresees reducing the number of operations so that a POLLING symbol 20 with X equal parts is sent and therefore N multipliers 23 and delayers 22 are not necessary since all that is required is N/X. The maximum is detected when the POLLING symbol arrives and X maximums appear. In summary, the detection of the POLLING symbols is carried out by means of correlating the signal received and the POLLING symbol previously stored in the head-end equipment and which is detected by means of a matched filter as described previously.

With module 25 a signal indicating detection of the POLLING symbol is generated when the module detects a total of X peaks with approximately the same power level, and spaced at N/X samples.

Once it has been detected that one or more users wish to transmit, the head-end equipment communicates by means of SAM messages 26, which user or users may have access to the upstream channel and the slots (time and /or frequency intervals) that may be used, these SAM messages being periodically sent in the downstream channel, as used for example in the process described in the Spanish patent submission N° 200100916 and, in case of necessity, the sending of a synchronization sequences following blind acquisition 12 may be requested, as already described previously.

## Claims

1. **PROCESS FOR SYNCHRONIZATION OF COMMUNICATION INVOLVING MULTIPLE USER EQUIPMENTS WITH A HEAD-END EQUIPMENT BY MEANS OF OFDM MODULATION, UPSTREAM CHANNEL,** applicable to two-way communication over the electricity network including means to add and extract a cyclic prefix (10) from the OFDM symbols (7) so as to avoid intersymbol interferences(ISI), and in which synchronization in frequency and time is carried out in the downstream channel, that is the communication from the head-end equipment (1) with the user equipments (2) by means of sending synchronization sequences (3), and **characterized in that** it comprises:
- frequency synchronization by means of correcting the sampling frequency in the various user equipments (2) starting from the estimation carried out in the frequency synchronization in the downstream channel; and
- pre-compensation, in the user equipments (2), of the rotation that the various carriers suffer on being sent in the upstream channel starting from the estimation of the rotation suffered by the carriers in the downstream channel, so that the head-end equipment (1) will not need to carry out corrections in reception in the upstream channel;
- time synchronization by of the user equipments (2) and the head-end equipment (1) by means of estimating the moment when the OFDM symbols (7) are sent to the head end, so that it can receive them in previously fixed moments of time;
- interrogate the users by means of assignation by the head-end of intervals of time and/or frequency in the upstream channel, slots (19), divided in fragments (27) for the interrogation of the user equipment (2) where these reply to the head-end (1) if and only if they wish to access the upstream channel;
from which the head-end equipment (1) distributes the upstream channel between the petitions received and sends said distribution to the user equipment (2) so that these can transmit without collisions.

2. **PROCESS FOR SYNCHRONIZATION OF COMMUNICATION INVOLVING MULTIPLE USER EQUIPMENTS WITH A HEAD-END EQUIPMENT BY MEANS OF OFDM MODULATION, UPSTREAM CHANNEL,** according to Claim 1, **characterized in that** it comprises the use of the same oscillators to generate the sampling transmission and reception frequencies both in the head-end equipment and the user equipments, so that frequency error in the upstream channel will be proportional to frequency error in the downstream channel and synchronization in frequency in the upstream channel is carried out at the same time as synchronization in frequency in the downstream channel.

3. **PROCESS FOR SYNCHRONIZATION OF COMMUNICATION INVOLVING MULTIPLE USER EQUIPMENTS WITH A HEAD-END EQUIPMENT BY MEANS OF OFDM MODULATION, UPSTREAM CHANNEL,** according to Claim 2, **characterized in that** the pre-compensation of the rotation carried out in the user equipments occurs by means of a rotor included in the transmitter, estimated from the estimation carried out in each one of the carriers of the received signals in the downstream channel in the user equipment , so that it is not necessary to carry out rotation correction in the head-end equipment of the signal received from the various user equipments.

4. **PROCESS FOR SYNCHRONIZATION OF COMMUNICATION INVOLVING MULTIPLE USER EQUIPMENTS WITH A HEAD-END EQUIPMENT BY MEANS OF OFDM MODULATION, UPSTREAM CHANNEL,** according to Claim 1, **characterized in that** synchronization comprises the generation and sending of one or more synchronization sequences from the user equipment (2), to the head-end (1), when the head-end equipment requires it; the synchronization sequence being made up of two identical synchronization symbols, and said synchronization sequence being detected in the head-end by maximizing the maximum likelihood criteria, so that time synchronization is carried out starting from the calculation of the maximum correlation of the sequence samples sent by the various users, where this maximum is determined as the mid point in the flat zone of the correlation peak the size of which, in number of samples, is equal to the number of samples of the cyclic prefix (10) without intersymbol interference.

5. **PROCESS FOR SYNCHRONIZATION OF COMMUNICATION INVOLVING MULTIPLE USER EQUIPMENTS WITH A HEAD-END EQUIPMENT BY MEANS OF OFDM MODULATION, UPSTREAM CHANNEL,** according to Claim 4, **characterized in that** synchronization in time comprises an acquisition and a tracking stage where the moment of transmission of the OFDM symbols (7) is modified in the various user equipment (2) starting from an estimation carried out so that said symbols will be received by the head-end equipment in previously established fixed moments in time.

6. **PROCESS FOR SYNCHRONIZATION OF COMMUNICATION INVOLVING MULTIPLE USER EQUIPMENTS WITH A HEAD-END EQUIPMENT BY MEANS OF OFDM MODULATION, UPSTREAM CHANNEL,** according to Claim 5, **characterized in that** the time synchronization.acquisition stage is determined by an open loop in which the user equipments (2) estimate (12) the start (8) of transmission for each OFDM symbol (7) beginning from the time synchronization obtained in the downstream channel; so that having estimated the moment of arrival (9) of the OFDM symbols (7) received in the downstream channel, the user equipment compensates the delay introduced by the filters in its receiver and transmitter, as well as the average error which is established due to the cyclic prefix (10) and transmits the OFDM symbols (7) in the moment (9) estimated following the compensation.

7. **PROCESS FOR SYNCHRONIZATION OF COMMUNICATION INVOLVING MULTIPLE USER EQUIPMENTS WITH A HEAD-END EQUIPMENT BY MEANS OF OFDM MODULATION, UPSTREAM CHANNEL,** according to Claims 5 and 6, **characterized in that** the time synchronization tracking stage is determined by a closed loop in which the head-end equipment (14) estimates, by means of the received signal (13) that was sent in the time synchronization acquisition stage by a user equipment (2), the number of samples that the sending of OFDM symbols (7) must be advanced or delayed by said user equipment so as to receive them exactly in the moment expected; so that the head-end equipment sends (15) this number of samples to the user equipment in the downstream channel as a parameter of the SAM message (26) that the head-end conventionally sends to the user equipment, and from this, the user equipment (16) carries out said advance or delay in sending the OFDM symbols, continually undertaking the open loop of the time synchronization, so that the estimation carried out by the closed loop compensates the delay introduced by the channel.

8. **PROCESS FOR SYNCHRONIZATION OF COMMUNICATION INVOLVING MULTIPLE USER EQUIPMENTS WITH A HEAD-END EQUIPMENT BY MEANS OF OFDM MODULATION, UPSTREAM CHANNEL,** according to Claim 1, **characterized in that** the head-end equipment indicates to the various user equipments when to send synchronization sequences (3), and grants slots by means of SAM messages sent in the downstream channel, so as to carry out adequate synchronization with respect to the user equipment, so that the detection of synchronization sequences (3) for a user in the upstream channel is only carried out that user was ordered to send the synchronization sequence.

9. **PROCESS FOR SYNCHRONIZATION OF COMMUNICATION** **INVOLVING MULTIPLE USER EQUIPMENTS WITH A HEAD-END EQUIPMENT BY MEANS OF OFDM MODULATION, UPSTREAM CHANNEL,** according to Claim 1, **characterized in that** the head-end equipment assigns interrogation slots (19), divided in fragments (27) by means of sending SAM messages (26) to the various user equipments (2), said user equipment, in the case where they need to transmit, transmitting a POLLING symbol (20) in the assigned fragments (27), so that the head-end equipment determines which user equipment desires to transmit information and optimises the distribution algorithms of the upstream channel between the user equipments.

10. **PROCESS FOR SYNCHRONIZATION OF COMMUNICATION INVOLVING MULTIPLE USER EQUIPMENTS WITH A HEAD-END EQUIPMENT BY MEANS OF OFDM MODULATION, UPSTREAM CHANNEL,** according to Claim 9, **characterized in that** the interrogation slots (19) are divided into small fragments that are equal to or greater than the size of the POLLING symbol (20) so as to interrogate various user equipments at the same time, therefore, in this case the head end, by means of SAM messages, assigns a fragment to one or more user equipments that it wishes to interrogate and in which the user that wishes to transmit replies to the interrogation by means of a POLLING symbol (20) in the assigned fragment.

11. **PROCESS FOR SYNCHRONIZATION OF COMMUNICATION INVOLVING MULTIPLE USER EQUIPMENTS WITH A HEAD-END EQUIPMENT BY MEANS OF OFDM MODULATION, UPSTREAM CHANNEL,** according to Claim 10, **characterized in that** in each fragment the users send only one POLLING symbol (20), leaving the rest of the fragment in silence (21) when this occupies more than one symbol, so that there is no overlapping of POLLING symbols (20) in reply to the interrogation of the users, when replying in two distinct fragments while the user equipments are not correctly synchronized in time.

12. **PROCESS FOR SYNCHRONIZATION OF COMMUNICATION INVOLVING MULTIPLE USER EQUIPMENTS WITH A HEAD-END EQUIPMENT BY MEANS OF OFDM MODULATION, UPSTREAM CHANNEL,** according to Claims 1 and 11, **characterized in that** the detection of the POLLING symbol (20) is carried out by means of the correlation of the received signal and that of a POLLING symbol previously stored in the head-end equipment, preferably as a matched filter so as to carry out detection.

13. **PROCESS FOR SYNCHRONIZATION OF COMMUNICATION INVOLVING MULTIPLE USER EQUIPMENTS WITH A HEAD-END EQUIPMENT BY MEANS OF OFDM MODULATION, UPSTREAM CHANNEL,** according to Claim 12, **characterized in that** the POLLING symbol (20) has X equal parts to use a finite response matched filter with N/X products (23) and delays (22), where N is the number of samples in the POLLING symbol (20) sent by the user in the fragment assigned by the interrogation slot (19), when it needs to transmit in the upstream channel.
